# EUROPEAN PATENT SPECIFICATION

(11) **EP 4 600 693 B1**
(45) Date of publication and mention of the grant of the patent: **30.09.2026**
(21) Application number: 24155925.1
(22) Date of filing: 06.02.2024
(51) Int. Cl.: G01S 7/481, G01S 7/4911, G01S 7/4912, G01S 17/34, G01S 17/42, G01S 17/931

(54) **DEVICE AND METHOD FOR SCANNING RANGE MEASUREMENT**
VORRICHTUNG UND VERFAHREN ZUR ABTASTENTFERNUNGSMESSUNG
DISPOSITIF ET PROCÉDÉ DE MESURE DE PLAGE DE BALAYAGE

(43) Date of publication of application: 13.08.2025
(73) Proprietor: Scantinel GmbH, 89077 Ulm (DE)
(72) Inventor: Horn, Jan, 80636 München (DE); Aksarin, Stanislav, 76187 Karlsruhe (DE); Hosseini, Naser, 1090 Jette (BE)
(74) Representative: Ostertag & Partner Patentanwälte mbB

(56) References cited:
- US-A1- 2021 316 756
- US-A1- 2021 364 607

## Description

### BACKGROUND OF THE INVENTION

### 1. Field of the Invention

The invention relates to a device and a method for scanning range - and preferably also velocity - measurement relative to a moving or unmoving object on the basis of FMCW LiDAR technology. Such devices and methods can be used, for example, in autonomously driving vehicles and may be implemented at least to some extent as photonic integrated circuits (PIC) that do not contain any moving parts.

### 2. Description of the Prior Art

Frequency-modulated continuous wave (FMCW) is a range and velocity measuring technology which was originally developed for RADAR applications. If light instead of radio waves are used, this technology is usually referred to as FMCW LiDAR, in which LiDAR is an acronym for "Light Detection And Ranging".

In FMCW LiDAR scanning devices, frequency-modulated light beams scan the environment. A small fraction of the light, which is diffusely reflected at an object, is received and superimposed with a local oscillator wave. The frequency difference between the two signals, which is usually referred to as beat frequency, is measured and used to compute the range of the object. By using a tunable laser as light source and a photodiode as detector, the beat frequency can be extracted directly from the photodiode current, because the photodiode delivers a current that is proportional to the squared sum of the two optical waves ("self-mixing effect"). If the Doppler shift is taken into account, the relative velocity between the scanning device and the object along the light propagation direction can be calculated, too.

Scanning devices based on this measurement principle have to be very robust and reliable if they are to be used in vehicles. This is true in particular if the vehicles drive autonomously, since the safety in autonomous driving decisively depends on the scanning device that is used to generate a three-dimensional profile of the environment. Scanning devices which are implemented as photonic integrated circuits (PIC) do not require moving components and are therefore particularly suitable for applications in vehicles.

Such PIC scanning devices are disclosed, for example, in WO 2021/239408 A1. These devices include a switching matrix comprising a plurality of optical switches that are arranged in a tree-like manner and are usually based on the thermo- or electro-optical effect. The switching matrix distributes the optical signals among different free-space couplers that emit the optical signal into free-space. The free-space couplers are arranged in a front focal plane of a collimating optical system that directs the light beams emitted from the free-space couplers into various directions.

However, optical switches - regardless of whether they are based on the thermo- or on the electro-optical effect - have significant internal losses. If light passes through a sequence of several optical switches in a switching matrix, its intensity is significantly reduced. Since long-range LiDAR systems require intense measuring light beams, the losses occurring in the optical switches have to be compensated for by light amplifies. This in turn leads to high power consumption and thermal problems.

One approach to solve the problems associated with the provision of switch matrices is to use at certain positions in the switching matrix optical switches that have smaller internal losses, but at the expense of longer switching times, as this is described in EP 3 916 423 A1. With this approach, the losses in the optical switches are noticeably reduced, but not yet to such an extent that the problems described above regarding power consumption and heating can be considered solved.

US 2019/0265574 A1 discloses a different approach in which the optical switches are replaced by a combination of passive light splitters and active Semiconductor Optical Amplifiers (SOAs). The SOAs can be individually controlled by an externally applied electrical signal so that they either block the incoming light or pass the light amplified. SOAs have faster switching speeds (typically a few ns) compared to thermal phase shifters (more than 10 µs). Furthermore, SOAs have a small-signal gain of 20 dB up to 30 dB so that they boost the seed laser output to provide the desired output power. For instance, the SOA output power may range up to 125 mW. SOAs can be photonically integrated using hybrid flip-chip integration.

In this prior art solution, one or more 3 dB couplers are arranged between the laser and the SOAs. These 3 dB couplers guide the reflected light towards the detector(s) of the heterodyne detection circuitry. However, for ensuring that the SOAs receive sufficient input power, pre-amplifiers are required that amplify the optical signals before they get to the 3 dB couplers. This is disadvantageous, because the laser signal amplified by the pre-amplifier also enters, via the 3 dB splitter, the signal path to the detector. This amplified local oscillator (LO) signal tends to be much stronger than the reflected signals that have been amplified by the SOAs. As a result, the detector may get into saturation and is thus "blinded" by the LO signal.

US 2023/0275402 A1 discloses the use of SOAs at various positions in a photonic FMCW LiDAR chip. The SOA may be arranged between the light source and a passive beam splitter, within a passive distribution matrix consisting of a plurality of beam splitters that are arranged in a tree-like manner, or between such a distribution matrix and the free-space couplers.

WO 2023/104297 A1 discloses an FMCW LiDAR device with a bistatic architecture in which the reflected light does not enter the free-space couplers that are used for emitting the light, but free-space couplers in a different photonic chip. The transmitter chip combines active optical switches and SOAs. More specifically, light generated by the laser is branched by a splitter between p ≥ 2 processing units. Each of the p processing units comprises an SOA as initial booster that feeds an active and cascaded one-dimensional switching matrix that may comprise MZI-based switching components. The switching matrix distributes the boosted light among N columns of n_{MB} grating couplers. Thus, at a given instant, p x n_{MB} beams are emitted simultaneously. However, the measuring rate of this device is too small for ambitious applications.

US 2021/0364607 A1 discloses an FMCW LiDAR device according to the preamble of claims 1 and 10. This device includes multiple optical processing units, which are connected optically in parallel to a light source. Each processing unit has an optical distribution matrix including multiple optical switches that distribute optical output signals selectively onto different optical waveguides. In one embodiment, each processing unit also comprises an optical amplifier.

US 2021/316756 A1 discloses a LiDAR device comprising an optical distribution matrix that distributes optical signals simultaneously or successively onto optical output waveguides. Input waveguides, which are independent of the output waveguides, guide the optical signals reflected from the object to detectors while bypassing the optical distribution matrix.

### SUMMARY OF THE INVENTION

It is an object of the present invention to provide a device and a method for scanning range measurement that allows to emit intense measuring light beams at a very high measuring rate.

With regard to the device, this object is achieved by a device in accordance with claim 1.

The invention is based on the consideration that switchable semiconductor optical amplifiers (SOA) can switch between an "off" and an "on" state much faster (by a factor of approximately 1000) than optical switches that distribute an incoming signal between two or more outputs. This makes it possible to use the SOAs for very fast switching between the optical channels of the device. Fast switching is, in turn, required for high spatial resolution within a large field of view. The time, during which the SOA of a processing unit is in its "off" state, is used to connect the SOA with another free-space coupler via the comparatively slow switch matrix.

The advantages provided by the fast switchable semiconductor optical amplifiers are greatest if the control unit is configured to control the switchable semiconductor optical amplifiers and the switching matrices of the processing units in an alternating manner such that after a free-space coupler of one processing unit has emitted a light portion, a free-space coupler of another processing unit emits the next light portion. In other words, each processing unit emits only a single light signal from one of its free-space couplers. Then another processing unit emits a light signal from one of its free-space couplers, and so on. The time interval between any two successive light signals is then extremely short and only limited by the very short switching time of the semiconductor optical amplifiers. In principle, however, it is also possible to use other switching schemes in which each processing unit emits not only one, but two or more light signals from several or all of its free-space couplers. In that case, however, some time intervals between successive light pulses are determined by the longer switching time of the optical switches in the switch matrix.

Preferably, the device comprises more than two, e.g., 16, 32 or 62, processing units. In that case it is preferred if, at a given time, one half of the available switchable semiconductor optical amplifiers are in the "on" state, while the other half are in the "off" state. For example, if there are processing units 1 to 32, processing units 1, 3, 5, ...., 31 may emit light during a first time interval of predetermined length through one of their free-space couplers, while in the remaining processing units 2, 4, 6, ..., 32 the switchable optical semiconductor amplifiers are in the "off" state so that the time can be used to change the switching state of the optical switches in the switch matrix. During the next time interval, the groups of processing units change their role, i.e. processing units 1, 3, 5, ..., 31 do not emit light, but change the switching state of the optical switches, while the remaining processing units 2, 4, 6, ..., 32 emit light, but do not change the switching state of their optical switches.

Such a control scheme makes it possible to emit N/2 light signals simultaneously with only N processing units, resulting in a strong parallelization and a high measuring rate.

In an embodiment, the N free-space couplers of each processing unit are configured to receive the reflected light. Each processing unit further comprises at least one detector that is connected to the N free-space couplers. Such a monostatic design has many advantages over a bistatic design. For example, the retroreflection at the object is often stronger than reflections into other directions, which helps to improve the signal-to-noise ratio (SNR). However, the invention can also be used with bistatic designs.

In an embodiment, each processing unit comprises a merging matrix that connects the N free-space couplers to the at least one detector. Compared to embodiments in which each free-space coupler has its own detector, the complexity and integration density of the device can be significantly reduced, because the number of detectors and associated electrical lines is much smaller. Since only one light beam is emitted by a processing unit at a given time, only one detector is required. However, it may also be envisaged to have several detectors so that not all, but only groups of free-space couplers share a common detector. This has the advantage of guaranteeing that there is no optical cross-talk within the same processing unit and allows for lower switch speed requirements.

The merging matrix may comprise a plurality of optical switches. Compared to embodiments in which the merging matrix comprises passive beam combiners, this has the advantage of redirecting the optical signal in the merging matrix from the free-space couplers to a specific detector without optical loss.

In an embodiment each processing unit has N = 4 free-space couplers, two detectors and two optical switches in the switch matrix. This layout turns out to be a very good trade-off between complexity and integration density on the one hand and losses caused by too many switches on the other hand.

Each processing unit may comprise a plurality of light separators that guides more than half of the reflected light coupled into one of the free-space couplers towards the detector. This is an improvement compared to embodiments in which 3 dB couplers are used for this separation. For example, the light separators may be optical circulators.

Preferably, however, the light separators are polarization splitters. The device may then comprise a polarization management unit ensuring that emitted light and reflected light have different states of polarization. This is simpler than using a proper optical circulator that cannot be easily integrated into a PIC design.

The polarization management unit may comprise a quarter-wave plate arranged in free-space such that both the light portion emitted by the free-space couplers and the reflected light pass the quarter-wave plate. This is a simple and effective approach, because a single bulk quarter-wave plate may be used for all optical channels.

Each processing unit may comprise a further light splitter configured to split off a sub-portion from one of the light portions before the latter enters the switching matrix, wherein the sub-portion forms the reference light. Thus, the reference light is split off within the processing unit itself so that no additional waveguides are required between the light source and the processing units. Alternatively, a retroreflector realized as off-chip bulk component may be used to produce the reference light. Such a retroreflector may be positioned such that light, which was emitted from a free-space coupler, but did not impinge on the object, is reflected back into the respective free-space coupler.

If, for example, each processing unit comprises two or more detectors, at least one reference light switch may be provided that is configured to distribute the reference light to the at least two detectors.

A method in accordance with the invention is specified in claim 10.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a scanning device according to the invention;
- Figure 2: is a top view of the scanning device shown in Figure 1;
- Figure 3: illustrates, in a very simplified manner, the basic operation of an FMCW distance measuring device;
- Figure 4: is a graph illustrating the time dependency of the frequency of the light emitted by a light source that is contained in the scanning device;
- Figure 5: is a schematic illustration of important components of the scanning device according to a first embodiment of the invention comprising two processing units;
- Figures 6a to 6e: illustrate the two processing units shown in Figure 5 in different switching states;
- Figure 7: schematically illustrates how scanning is achieved in the device shown in Figure 5;
- Figure 8: illustrates how a collimating optical system deflects the light beams emitted by the free-space couplers; and
- Figure 9: is a schematic illustration of important components of the scanning device according to a second embodiment of the invention comprising four processing units.

### DETAILED DESCRIPTION OF EMBODIMENTS

### 1. Application scenario

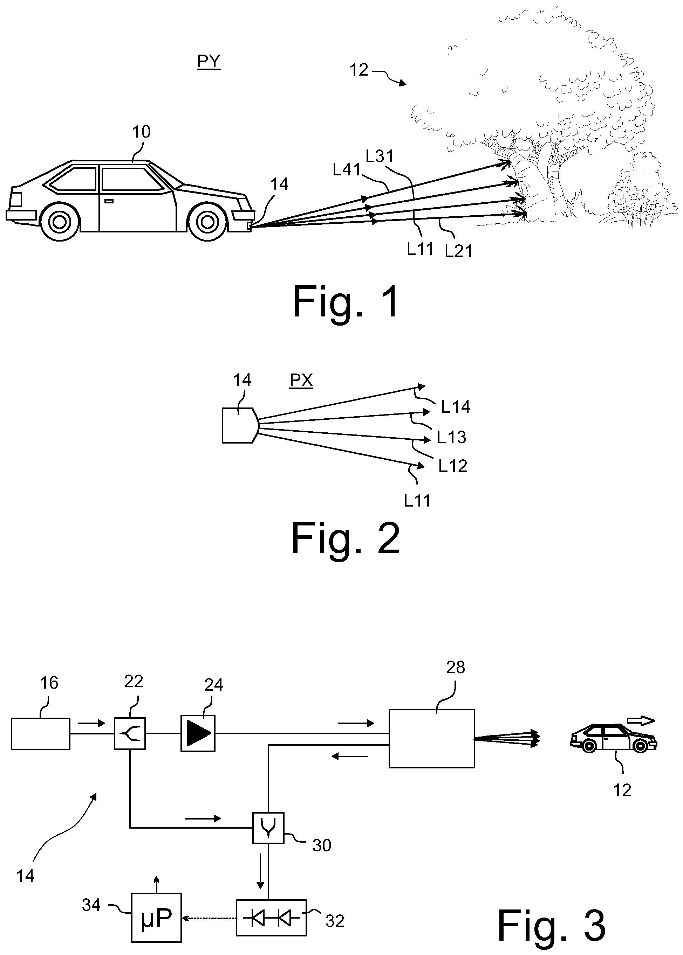

Figure 1 is a schematic side view of a vehicle 10 approaching an object 12 that is represented by a tree. The vehicle 10 has at least one scanning device 14 that uses light beams L11, L21, L31 and L41 to scan the environment ahead of the vehicle 10. From the range information generated by the scanning device 14 a three-dimensional image of the environment can be calculated. In addition, the scanning device 14 determines the relative speed to the object 12. This information is particularly important if the object 12 is another vehicle, an animal or a pedestrian that is also moving.

As can be seen in Figure 1, the scanning device 14 emits light beams L11 to L41 in different directions in a vertical plane (in Figure 1 this is the paper plane) in order to scan the environment in a vertical direction. Scanning also takes place in a horizontal direction, as this is shown in Figure 2 which is a top view on the scanning device 14. Four light beams L11, L12, L13 and L14 are shown which are emitted in different directions in a horizontal plane.

For the sake of clarity, it is assumed in Figures 1 and 2 that only four light beams Ln1 to Ln4 in four different planes - i.e. a total of 16 light beams - are generated by the scanning device 14. In reality, however, the scanning device 14 emits significantly more light beams. For example, k·2ⁿ light beams are preferred, where n is a natural number between 7 and 13 and indicates how many beams are emitted in one of k planes, where k is a natural number between 1 and 16.

### 2. FMCW principle

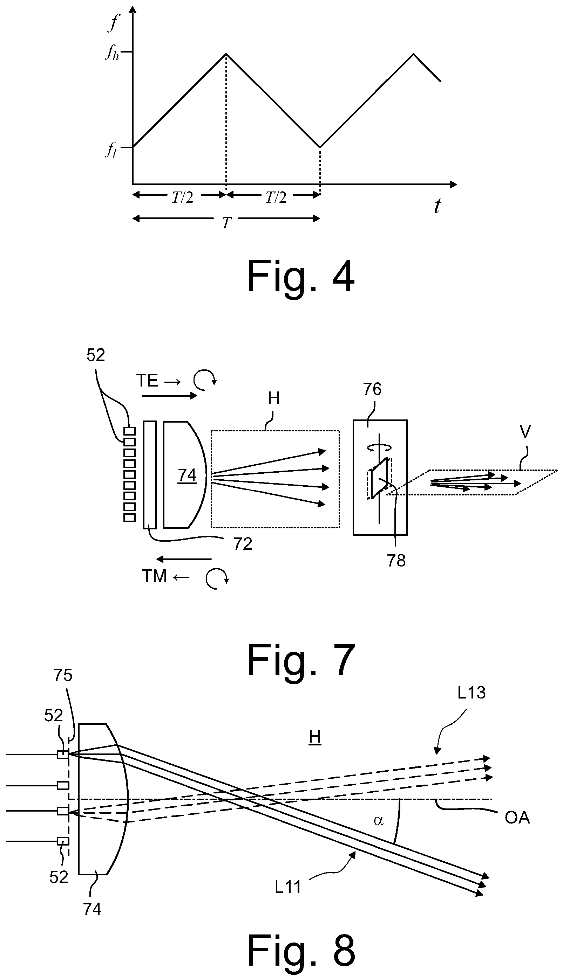

The basic operation of an FMCW range measuring device 14 will now be explained with reference to Figure 3 that illustrates the main components of such a device in a very schematic manner. The scanning device 14 comprises an FMCW light source 16 which generates measuring light. As shown in Figure 4, the measuring light has a frequency ***f*** that varies ("chirps") periodically over time ***t*** between a lower frequency ***f**ₗ* and a higher frequency ***fₕ**.* Each measurement interval with a chirp duration ***T*** is divided into two halves of equal length ***T***/2. During the first interval the frequency ***f*** increases linearly with a constant and positive upchirp rate ***r_{chirp}** =* d***f***/d***t**.* During the second interval, the frequency ***f*** decreases linearly with a constant negative downchirp rate *-**r_{chirp}**.* The frequency of the measured light can thus be described by a periodic triangular function. However, other functional relationships ***f(t)*** such as sawtooth functions are also contemplated.

Referring again to Figure 3, the light source 16 is connected to a splitter 22 which splits the measuring light into reference light (also referred to as local oscillator) and output light. In the illustrated embodiment, the output light is amplified by an optical amplifier 24. The amplified output light then enters a scanning unit 28 which deflects the output light into various directions, thereby scanning the environment ahead of the device 14.

The output light emitted by the scanning unit 28 is, at least to some extent, diffusely reflected at the object 12, which is represented in Figure 3 by a moving car. In a monostatic design, a small portion of the reflected light returns to the scanning unit 28 and enters the same optical waveguide from which it was emitted; in a bistatic design this portion enters a different optical waveguide that may be located in a separate housing. An example of a bistatic design is described in the aforementioned WO 2023/104297 A1.

This small portion of the reflected light is guided to a combiner 30 where the reflected light superimposes with the reference provided by the splitter 22. Since the frequencies of the superimposed light portions are slightly different due to the different optical path lengths, a beat signal is generated which is detected by a balanced photodetector or another type of detector 32. The electrical signals generated by the detector 32 are fed to a calculation unit 34, which calculates the range ***R*** and the relative radial velocity ***v*** to the object 12 based on the detected beat frequencies.

### 3. First Embodiment - Design

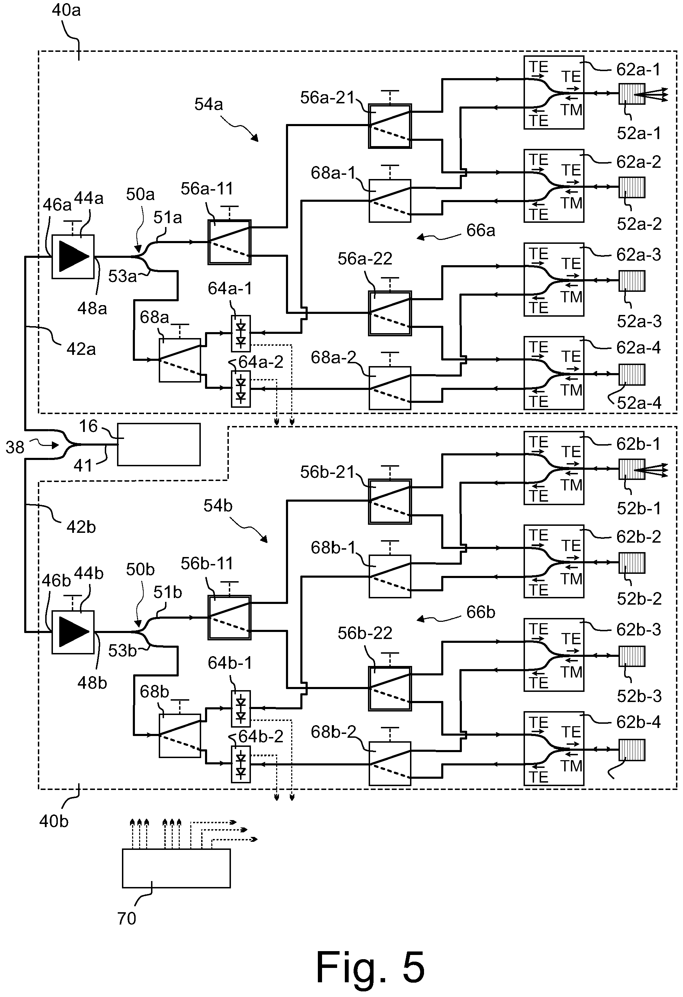

Figure 5 is a schematic illustration of some important components of the scanning device 14 according to a first embodiment of the invention.

The light source 16 is connected via a power splitter 38, e.g. a 3 dB splitter, to a first processing unit 40a and a second processing unit 40b. The power splitter 38 has one input waveguide 41 connected to the light source 16 and two output waveguides 42a, 42b connected to the processing units 40a, 40b, respectively. Preferably, the power splitter 38 splits the light generated by the light source 16 into two light portions of equal intensity.

In the following, the design of the first processing unit 40a is described in more detail. The second processing unit 40b has an identical design.

The first processing unit 40a comprises a switchable semiconductor optical amplifier (SOA) 44a having a light input port 46a connected to the output waveguide 42a and a light output 48a connected to a further light splitter 50a having an asymmetric splitting ratio, for example 100:1, so that most of the light portion is guided to a high level output port 51a of the further light splitter 50a and only a small fraction of the light portion is guided to a low level output port 53a. The SOA 44a amplifies the light portion that is received from the output waveguide 42a. A typical gain of the SOA 44a is between 10 dB and 40 dB, preferably between 20 dB and 30 dB. The SOA 44a is often realized on a separate substrate (not shown).

In this embodiment, the first processing unit 40a further comprises N = 4 free-space couplers 52a-1 to 52a-4 which selectively emit the light portion, which was guided through the output waveguide 42a and amplified by the SOA 44a, into free-space. The free-space couplers 52a-1 to 52a-4 may be realized as edge couplers or grating couplers, for example. The selection of the free-space coupler that shall, at a given time, emit the light portion, is accomplished by a 1xN switching matrix 54a comprising three optical switches 56a-11, 56a-21, 56a-22 and connecting the high level output 51a of the further splitter 50a to the free-space couplers 52a-1 to 52a-4. The optical switches 56a-11, 56a-21, 56a-22 are arranged in this embodiment in a two-level tree-like manner, with switch 56a-11 forming the first level and switches 56a-21 and 56a-22 forming the second level. The optical switches 56a-11, 56a-21, 56a-22 may be based on the thermo- or electro-optical effect, as this is known in the art as such.

The first processing unit 40a has a monostatic design. Therefore, the light reflected from the object 12 enters primarily the free-space coupler, from which it was previously emitted, and propagates along a short waveguide section commonly shared with the transmitted light portion until it reaches one of four light separators 62a-1 to 62a-4 formed by polarization dependent splitters. The latter guide the reflected light towards a first detector 64a-1 or a second detector 64a-2. The first detector 64a-1 detects the reflected light received by the upper two free-space couplers 52a-1 and 52a-2, and the second detector 64a-2 detects the reflected light received by the other two free-space couplers 52a-3 and 52a-4.

For ensuring a high signal-to-noise ratio on the detectors 64a-1 and 64a-2, a merging matrix 66a comprising further optical switches 68a-1, 68a-2 guides only light received in one of the free-space couplers 52a-1 to 52a-4 to the respective detector 64a-1 or 64a-2. By an appropriate control of the processing unit 42a, it can be achieved that the detector 64a-1 or 64a-2 detects only reflected light that entered the free-space coupler from which the light was previously emitted before reflection at the object 12. This will be explained below in further detail.

The two detectors 64a-1 and 64a-2 are connected, via a still further optical switch 68a, to the low level output port 53a of the further splitter 50a. The still further optical switch 68a is synchronized with the optical switches 56a-11, 56a-21, 56a-22 of the switching matrix 54a and ensures that at a given time only one of the two detectors receives a small amount of reference light (local oscillator) from the light source 16 via the low level port 53a of the further splitter 50a. This amount of reference light is determined by the splitting ratio of the further splitter 50a and is set so that the refence light and the reflected light incident on each of the detectors 64a-1 and 64a-2 have similar intensities.

As mentioned further above, the second processing unit 40b has exactly the same design.

All optical switches and the SOAs 44a, 44b contained in the two processing units 40a, 40b are electrically connected to a control unit 70 that controls these elements in a manner that will be explained in the next section.

Except for the SOAs 44a, 44b, all optical components shown in Figure 5 and described in the foregoing are arranged on a common photonic substrate, thereby forming a photonic integrated circuit (PIC). However, it is also possible to include also the SOA 44a, 44b on such a common photonic substrate. It may also be envisaged to form groups of components, for example the two processing units 40a, 40b, on different substrates, or to have only some of these components integrated in the PIC, while others are connected to the PIC via optical fibers.

### 4. First Embodiment - Control

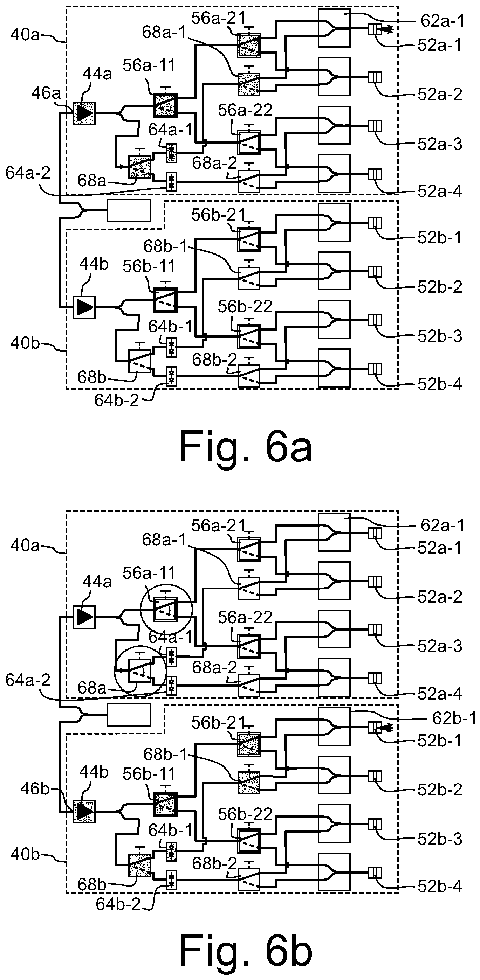

The control scheme applied by the control unit 70 to the processing units 40a, 40b will now be explained in more detail with reference to Figures 6a to 6e each illustrating the two processing units 40a, 40b in a simplified representation, but in different switching states. In these Figures, components through which light propagates are highlighted with a grey shade.

In the switching state shown in Figure 6a, it is assumed that the SOA 44a of the first processing unit 40a is in an "on" state, i.e. it amplifies the light portion that enters its light input 46a. The optical switches 56a-11, 56a-21 and 56a-22 of the switch matrix are controlled by the control unit 70 such that the light portion propagates, after amplification in the SOA 44a, through the optical switches 56a-11 and 56a-21 towards the free-space coupler 52a-1. The emission of the light portion is indicated in Figure 6a by a plurality of small arrows.

The retro-reflected or retro-scattered light enters the free-space coupler 52a-1, is separated by the separator 62a-1 in a manner that will be explained further below, and passes through the further optical switch 68a-1 of the merger matrix 66a towards the first detector 64a-1. Simultaneously, a small fraction of the light guided through the low level output port 53a of the further light splitter 50a is guided by the further optical switch 68a towards the detector 64a-1 where the two optical signals superimpose. The switches 68a, 68a-1 and 68a-2 ensure that neither reference light nor reflected light is lost by passive couplers. During this measurement, the second SOA 44b of the second processing unit 40b is in an "off" state in which no light can pass through the SOA 44b.

After the superposition of the reference light and the reflected light has been detected by the first detector 64a-1, the first SOA 44a is electrically brought into the "off" state in which it completely blocks the incoming light portion. Almost simultaneously, the second SOA 44b of the second processing unit 44b is activated so that the light portion at its light input 46b is amplified, see Figure 6b.

While the first SOA 44a was in its "on" state, the optical switches of the second processing unit 40b have been brought into the switching state shown in Figure 6b. As a result, the amplified light portion propagates through the optical switches 56b-11 and 56b-21 towards the free-space coupler 52b-1. Again, the emission of the light is indicated in Figure 6b by a plurality of small arrows.

Similar to what has been described above with reference to Figure 6a, the reflected light enters the free-space coupler 52b-1, is separated by the separator 62b-1 and passes through the further optical switch 68b-1 of the merger matrix 66b towards the first detector 64b-1 of the second processing unit 40b. Simultaneously, a small fraction of the light guided through the low level output port 53b is guided by the further optical switch 68b towards the first detector 64b-1 where the two optical signals superimpose.

During the measurement performed in the second processing unit 40b, the SOA 44a in the first processing unit 40a is in the "off" state. This time is used to change the switching state of several components of the first processing unit 40a. More specifically, the optical switch 56a-11 and the further optical switch 68a both highlighted in Figure 6b by circles change their switching state. In this manner, the first processing unit 40a is prepared for the next measurement once the two SOAs 44a, 44b change their roles again.

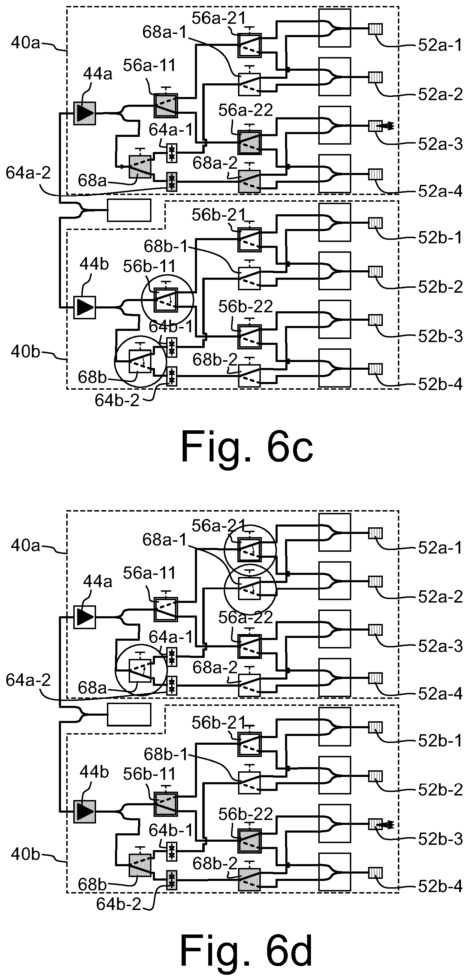

Figure 6c shows how the light is guided through the first processing unit 40a after the first SOA 44a has been brought again into the "on" state. Now the light portion propagates through the optical switches 56a-11 and 56a-22 towards the free-space coupler 52a-3. The reflected light is guided through the further optical switch 68a-2 towards the second detector 64a-2 that receives reference light via the further optical switch 68a.

During this measurement performed in the first processing unit 40a, the optical switch 56b-11 and the further optical switch 68b in the second processing unit 40b change their switching state so that the second processing unit 40b is prepared for the following measurement, as this is illustrated in Figure 6d.

During this measurement in which the second processing unit 40b is active, the optical switches 56a-21 and the further optical switches 68a-1 and 68a in the first processing unit 40a change their switching state, as this is again indicated by circles.

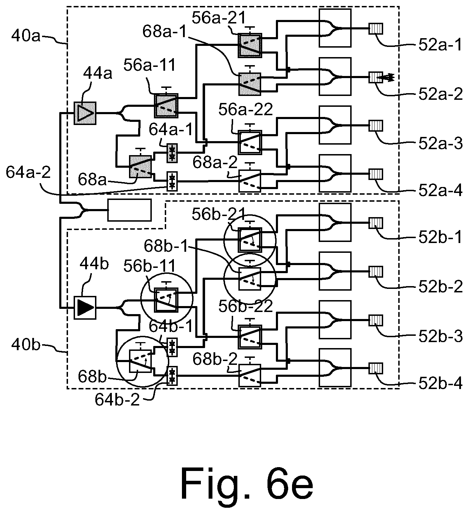

Once the SOA 44a takes over again, the amplified light portion is emitted from free-space coupler 52a-2 of the first processing unit 40a, see Figure 6e, and the reflected light is again detected by the first detector 64a-1. During this measurement, four optical switches of the second processing unit 40b change their switching state, namely the two optical switches 56b-11, 56b-21 and the two further optical switches 68b and 68b-1.

The two processing units 40a, 40b thus alternately emit the light portions arriving simultaneously at the two SOAs 44a, 44b through one of their free-space couplers. This means that after one of the free-space couplers 52a-1 to 52a-4 of the first processing unit 40a has emitted a light signal, a free-space coupler 52b-1 to 52b-4 of the second processing unit 40b emits the next light signal, and so on. Since the SOAs 44a, 44b can change between the on and the "off" state extremely fast, no time is lost between the individual measurements. The comparatively long time during a measurement is used to prepare the optical switches of the inactive processing unit for the next measurement.

### 5. First Embodiment - Scanning

Figure 7 illustrates how scanning is achieved in the device 14. It is assumed that the light portion emitted by one of the free-space couplers 52 is in a TE state of polarization (SOP). As the light passes through a quarter-wave plate 72, the SOP changes to a circular state of polarization, as indicated by arrow above the quarter-wave plate 72. The diverging light beams emitted by the selected free-space coupler 52 pass through a collimating optical system 74, which in Figure 7 is represented by a single lens element, but may comprise more than one lens or other optical elements. In Figure 8, it can be seen that the free-space couplers 52 are arranged in a front focal plane (which may also be slightly curved) 75 of the collimating optical system 74. Thus, the diverging light beams leave the collimating optical system 74 well collimated and with an angle α with respect to an optical axis OA of the collimating optical system 74. This angle α depends on the distance of the emitting free-space coupler 52 from the optical axis OA, as this becomes clear from Figure 8.

The emitted light beams L11, L13 shown in Figure 8 propagate in a horizontal plane H, as also shown in Figure 7. For scanning in a vertical plane V, a conventional mechanical scanner 76 comprising a rotating or oscillating mirror 78 may be used, see Figure 7. In other embodiments, a plurality of PICs, each representing a different emission plane, are stacked one on top of the other so that the free-space couplers 52 of all PICs do not form a line, but a two-dimensional array. In this case, no mechanical scanner 76 for the vertical scan direction V is required.

The reflected light is still circularly polarized when it impinges on the quarter-wave plate 72 again. As it passes the quarter-wave plate 72 a second time, its SOP is changed to a TM SOP, as this is indicated in Figure 7 below the quarter-wave plate 72.

The light separators 62a-1 to 62a-4 formed by polarization dependent splitters separate the TM polarized light from the common optical waveguide and convert it into TE polarized light, as this is indicated in Figure 5. Examples of suitable light separators with such functionality are described in e.g. US 2023/0127941 A1.

### 6. Second Embodiment - Four processing units

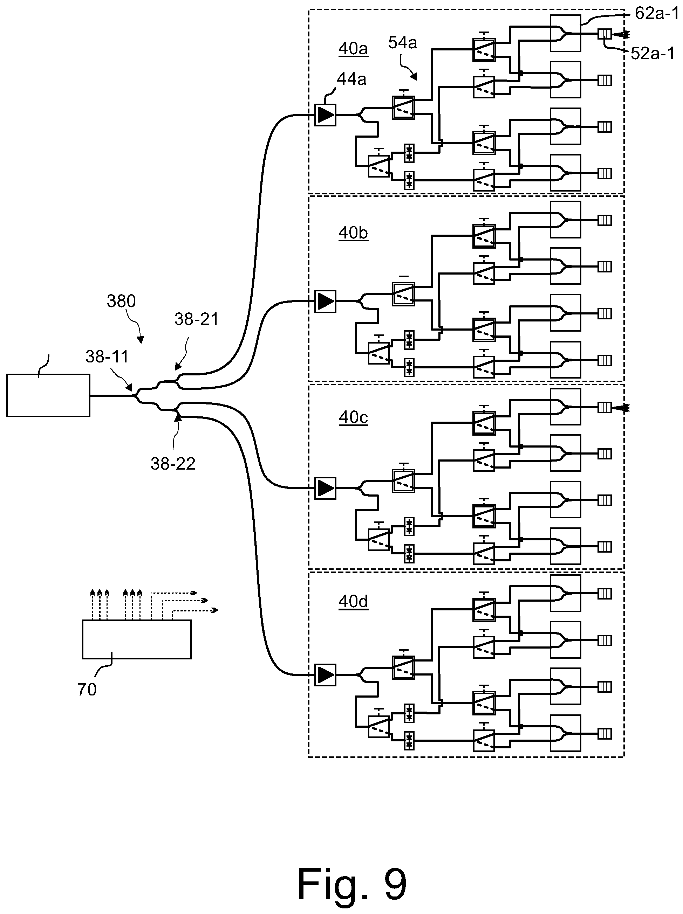

Figure 9 illustrates, in a representation similar to Figure 5, a second embodiment in which there are not only two, but four processing units 40a, 40b, 40c and 40d. Each processing unit 40a, 40b, 40c and 40d has the same design as the processing unit 40a that has been explained above in detail with reference to Figure 5. The only difference is that the power splitter 38 is replaced by a cascade 380 of three power splitters 38-11, 38-21, 38-22. In reality, the device may comprise, for example, 32 processing units, resulting in 128 optical channels if each processing unit has N = 4 free-space couplers 52.

In such an embodiment with more than two processing units, it is preferred if, at a given time, one half of the available switchable semiconductor optical amplifiers are in the "on" state, while the other half are in the "off" state. For example, if the processing units 40a, 40c emit light signals, the other two processing units 40b, 40d do not emit light signals, but use the available time to change the switching state of their switch matrices. During the next time interval, the processing units change their roles, i.e. the processing units 40a, 40c but change the switching state of their optical switches, while the other two processing units 40b, 40d emit light signals.

The embodiments disclosed herein can be realized using any integrated photonic platform, e.g. silicon, silicon nitride or indium phosphide. Furthermore, it should be noted that the roles of TE and TM SOP can of course be interchanged.

## Claims

1. A device (14) for scanning measurement of the range to an object (12), comprising:
a light source (16) configured to generate light having a varying frequency,
a light splitter (38; 380) configured to split the light generated by the light source into a plurality of light portions,
a plurality of processing units (40a, 40b; 40a, 40b, 40c, 40d), wherein each processing unit comprises
an optical amplifier (44a, 44b) connected to the light splitter (38; 380) and configured to amplify one of the light portions,
N free-space couplers (52a-1 to 52a-4, 52b-1 to 52b-4) with N = 2, 3, ...., wherein each free-space coupler is configured to emit the light portion that is amplified by the optical amplifier (44, 44b), and
a 1xN switching matrix (54a, 54b) comprising a plurality of optical switches (56a-11, 56a-21, 56a-22, 56b-11, 56b-21, 56b-22) and connecting the optical amplifier (44a, 44b) to the N free-space couplers,
a collimating optical system (74) having a front focal plane (75) in which the free-space couplers (52a-1 to 52a-4, 52b-1 to 52b-4) are arranged,
a detector (64a-1, 64a-2, 64b-1, 64b-2) configured to detect a superposition of reflected light that was emitted by the free-space couplers and reflected at the object (12), and reference light that was not reflected at the object (12), and
a calculation unit (34) configured to determine the range to the object (12) based on the superposition detected by the detector (64a-1, 64a-2, 64b-1, 64b-2), **characterized in that**
the optical amplifiers are switchable semiconductor optical amplifiers (44a, 44b),
and **in that**
the device comprises a control unit (70) configured to control the switchable semiconductor optical amplifier (44a, 44b) and the switching matrix of each processing unit (40a, 40b) such that, at a given time,
the switchable semiconductor optical amplifier (44a, 44b) of one processing unit (40a, 40b; 40a, 40b, 40c, 40d) is in an "on" state so that one of the free-space couplers (52a-1 to 52a-4, 52b-1 to 52b-4) of said one processing unit emits the light portion,
in another processing unit (40a, 40b; 40a, 40b, 40c, 40d), the switchable semiconductor optical amplifier (44a, 44b) is in an "off" state and at least one of the optical switches in the switching matrix (56a-11, 56a-21, 56a-22, 56b-11, 56b-21, 56b-22) is operated.

2. The device of claim 1, wherein the N free-space couplers (52a-1 to 52a-4, 52b-1 to 52b-4) of each processing unit (40a, 40b) are configured to receive the reflected light, and wherein each processing unit (40a, 40b) further comprises at least one detector (64a-1, 64a-2, 64b-1, 64b-2) that is connected to the N free-space couplers.

3. The device of claim 2, wherein each processing unit (40a, 40b) comprises a merging matrix that connects the N free-space couplers to the at least one detector.

4. The device of claim 3, wherein the merging matrix comprises a plurality of further optical switches (68a-1, 68a-2, 68b-1, 68b-2).

5. The device of any of claims 2 to 4, wherein each processing unit (40a, 40b) comprises a plurality of light separators (62a-1 to 62a-4, 62b-1 to 62b-4) that guides more than half of the reflected light coupled into one of the free-space couplers (52a-1 to 52a-4, 52b-1 to 52b-4) towards the detector (64a-1, 64a-2, 64b-1, 64b-2).

6. The device of any of the preceding claims, wherein the control unit (70) is configured to control the switchable semiconductor optical amplifiers (44a, 44b) and the switching matrices (54a, 54b) of the processing units (40a, 40b) in an alternating manner such that after a free-space coupler of one processing unit has emitted a light portion, a free-space coupler of another processing unit emits the next light portion.

7. The device of claim 6, wherein the control unit (70) is configured to control the switchable semiconductor optical amplifiers (44a, 44b) such that, at a given time, one half of the available switchable semiconductor optical amplifiers (44a, 44b) are in the "on" state, while the other half are in the "off" state.

8. The device of any of the preceding claims, wherein each processing unit (40a, 40b) comprises a further light splitter (22) configured to split off a sub-portion from one of the light portions before the latter enters the switching matrix (54a, 54b), and wherein the sub-portion forms the reference light.

9. The device of claim 8, wherein each processing unit (40a, 40b) comprises at least two detectors (64a-1, 64a-2, 64b-1, 64b-2) and at least one reference light switch (68a, 68b) configured to distribute the reference light to the at least two detectors.

10. A method for performing a scanning measurement of the range to an object (12), comprising the following steps:
generating light having a varying frequency;
splitting the light into a plurality of light portions;
processing each light portion in a different processing unit (40a, 40b), wherein the processing comprises
amplifying the respective light portion in an optical amplifier (44a, 44b);
selecting a free-space coupler from a plurality of N free-space couplers (52a-1 to 52a-4, 52b-1 to 52b-4);
controlling optical switches (56a-11, 56a-21, 56a-22, 56b-11, 56b-21, 56b-22) of a 1xN switching matrix (54a, 54b) such that the amplified light portion is guided towards the selected free-space coupler; and
emitting the amplified light portion by the selected free-space coupler into free-space;
collimating the amplified light portion emitted by the selected free-space coupler using a collimating optical system (70);
detecting a superposition of reflected light that was emitted by the selected free-space coupler and reflected at the object (12), and reference light that was not reflected at the object (12); and
calculating the range to the object (12) based on the detected superposition;
**characterized in that**
the respective light portion is amplified in a switchable semiconductor amplifier (44a, 44b), and **in that**
the switchable semiconductor optical amplifier (44a, 44b) and the switching matrix (54a, 54b) of each processing unit (40a, 40b) are controlled such that at a given time,
the switchable semiconductor optical amplifier (44a, 44b) of one processing unit is in an "on" state so that the selected free-space coupler of said one processing unit emits the amplified light portion,
in another processing unit (40a, 40b; 40a, 40b, 40c, 40d), the switchable semiconductor optical amplifier (44a, 44b) is in an "off" state and at least one of the optical switches in the switching matrix (56a-11, 56a-21, 56a-22, 56b-11, 56b-21, 56b-22) is operated.

11. The method of claim 10, wherein the switchable semiconductor optical amplifiers (44a, 44b) and the switching matrices (54a, 54b) of the processing units (40a, 40b) are controlled in an alternating manner such that after a free-space coupler (52a-1 to 52a-4, 52b-1 to 52b-4) of one processing unit has emitted a light portion, a free-space coupler of another processing unit emits the next light portion.

12. The method of claim 10 or 11, wherein the N free-space couplers (52a-1 to 52a-4, 52b-1 to 52b-4) of each processing unit (40a, 40b) receive the reflected light, and wherein at least one detector (64a-1, 64a-2, 64b-1, 64b-2) in each processing unit detects the reflected light.

13. The method of claim 12, wherein the reflected light propagates through a merging matrix from the selected free-space coupler to the at least one detector (64a-1, 64a-2, 64b-1, 64b-2).

14. The method of claim 12 or 13, wherein more than half of the reflected light is separated by light separators (62a-1 to 62a-4, 62b-1 to 62b-4) from an optical waveguide after entering the selected free-space coupler.

15. The method of any claims 10 to 14, wherein in each processing unit (40a, 40b) a sub-portion from the respective light portion is split off before the respective light portion enters the switching matrix (54a, 54b), and wherein the sub-portion forms the reference light.

## Patentansprüche

1. Vorrichtung (14) zur scannenden Messung des Abstands zu einem Objekt (12), umfassend:
eine Lichtquelle (16), die dazu eingerichtet ist, Licht mit einer variierenden Frequenz zu erzeugen,
einen Lichtteiler (38; 380), der dazu eingerichtet ist, das von der Lichtquelle erzeugte Licht in eine Vielzahl von Lichtanteilen aufzuteilen,
eine Vielzahl von Verarbeitungseinheiten (40a, 40b; 40a, 40b, 40c, 40d), wobei jede Verarbeitungseinheit umfasst:
einen optischen Verstärker (44a, 44b), der mit dem Lichtteiler (38; 380) verbunden und dazu eingerichtet ist, einen der Lichtanteile zu verstärken,
N Freiraumkoppler (52a-1 bis 52a-4, 52b-1 bis 52b-4) mit N = 2, 3, ..., wobei jeder Freiraumkoppler dazu eingerichtet ist, den von dem optischen Verstärker (44a, 44b) verstärkten Lichtanteil auszusenden, und
eine 1×N-Schaltmatrix (54a, 54b), die eine Vielzahl optischer Schalter (56a-11, 56a-21, 56a-22, 56b-11, 56b-21, 56b-22) umfasst und den optischen Verstärker (44a, 44b) mit den N Freiraumkopplern verbindet,
ein kollimierendes optisches System (74) mit einer vorderen Brennebene (75), in der die Freiraumkoppler (52a-1 bis 52a-4, 52b-1 bis 52b-4) angeordnet sind,
einen Detektor (64a-1, 64a-2, 64b-1, 64b-2), der dazu eingerichtet ist, eine Überlagerung von reflektiertem Licht, das von den Freiraumkopplern ausgesandt und an dem Objekt (12) reflektiert wurde, und Referenzlicht, das nicht an dem Objekt (12) reflektiert wurde, zu detektieren, und eine Recheneinheit (34), die dazu eingerichtet ist, den Abstand zu dem Objekt (12) auf der Grundlage der von dem Detektor (64a-1, 64a-2, 64b-1, 64b-2) detektierten Überlagerung zu bestimmen,
**dadurch gekennzeichnet, dass**
die optischen Verstärker schaltbare optische Halbleiterverstärker (44a, 44b) sind, und dass
die Vorrichtung eine Steuereinheit (70) umfasst, die dazu eingerichtet ist, den schaltbaren optischen Halbleiterverstärker (44a, 44b) und die Schaltmatrix jeder Verarbeitungseinheit (40a, 40b) derart anzusteuern, dass zu einem gegebenen Zeitpunkt
der schaltbare optische Halbleiterverstärker (44a, 44b) einer Verarbeitungseinheit (40a, 40b; 40a, 40b, 40c, 40d) in einem "Ein"-Zustand ist, sodass einer der Freiraumkoppler (52a-1 bis 52a-4, 52b-1 bis 52b-4) dieser einen Verarbeitungseinheit den Lichtanteil aussendet,
in einer anderen Verarbeitungseinheit (40a, 40b; 40a, 40b, 40c, 40d) der schaltbare optische Halbleiterverstärker (44a, 44b) in einem "Aus"-Zustand ist und mindestens einer der optischen Schalter in der Schaltmatrix (56a-11, 56a-21, 56a-22, 56b-11, 56b-21, 56b-22) betätigt wird.

2. Vorrichtung nach Anspruch 1, wobei die N Freiraumkoppler (52a-1 bis 52a-4, 52b-1 bis 52b-4) jeder Verarbeitungseinheit (40a, 40b) dazu eingerichtet sind, das reflektierte Licht zu empfangen, und wobei jede Verarbeitungseinheit (40a, 40b) ferner mindestens einen Detektor (64a-1, 64a-2, 64b-1, 64b-2) umfasst, der mit den N Freiraumkopplern verbunden ist.

3. Vorrichtung nach Anspruch 2, wobei jede Verarbeitungseinheit (40a, 40b) eine Zusammenführungsmatrix umfasst, welche die N Freiraumkoppler mit dem mindestens einen Detektor verbindet.

4. Vorrichtung nach Anspruch 3, wobei die Zusammenführungsmatrix eine Vielzahl weiterer optischer Schalter (68a-1, 68a-2, 68b-1, 68b-2) umfasst.

5. Vorrichtung nach einem der Ansprüche 2 bis 4, wobei jede Verarbeitungseinheit (40a, 40b) eine Vielzahl von Lichttrennern (62a-1 bis 62a-4, 62b-1 bis 62b-4) umfasst, die mehr als die Hälfte des in einen der Freiraumkoppler (52a-1 bis 52a-4, 52b-1 bis 52b-4) eingekoppelten reflektierten Lichts zu dem Detektor (64a-1, 64a-2, 64b-1, 64b-2) führen.

6. Vorrichtung nach einem der vorhergehenden Ansprüche, wobei die Steuereinheit (70) dazu eingerichtet ist, die schaltbaren optischen Halbleiterverstärker (44a, 44b) und die Schaltmatrizen (54a, 54b) der Verarbeitungseinheiten (40a, 40b) abwechselnd derart anzusteuern, dass, nachdem ein Freiraumkoppler einer Verarbeitungseinheit einen Lichtanteil ausgesandt hat, ein Freiraumkoppler einer anderen Verarbeitungseinheit den nächsten Lichtanteil aussendet.

7. Vorrichtung nach Anspruch 6, wobei die Steuereinheit (70) dazu eingerichtet ist, die schaltbaren optischen Halbleiterverstärker (44a, 44b) derart anzusteuern, dass sich zu einem gegebenen Zeitpunkt eine Hälfte der verfügbaren schaltbaren optischen Halbleiterverstärker (44a, 44b) in dem "Ein"-Zustand befindet, während sich die andere Hälfte in dem "Aus"-Zustand befindet.

8. Vorrichtung nach einem der vorhergehenden Ansprüche, wobei jede Verarbeitungseinheit (40a, 40b) einen weiteren Lichtteiler (22) umfasst, der dazu eingerichtet ist, einen Teilanteil von einem der Lichtanteile abzuzweigen, bevor dieser in die Schaltmatrix (54a, 54b) eintritt, und wobei der Teilanteil das Referenzlicht bildet.

9. Vorrichtung nach Anspruch 8, wobei jede Verarbeitungseinheit (40a, 40b) mindestens zwei Detektoren (64a-1, 64a-2, 64b-1, 64b-2) und mindestens einen Referenzlichtschalter (68a, 68b) umfasst, der dazu eingerichtet ist, das Referenzlicht auf die mindestens zwei Detektoren zu verteilen.

10. Verfahren zum Durchführen einer scannenden Messung des Abstands zu einem Objekt (12), umfassend die folgenden Schritte:
Erzeugen von Licht mit einer variierenden Frequenz;
Aufteilen des Lichts in eine Vielzahl von Lichtanteilen;
Verarbeiten jedes Lichtanteils in einer anderen Verarbeitungseinheit (40a, 40b), wobei das Verarbeiten umfasst:
Verstärken des jeweiligen Lichtanteils in einem optischen Verstärker (44a, 44b);
Auswählen eines Freiraumkopplers aus einer Vielzahl von N Freiraumkopplern (52a-1 bis 52a-4, 52b-1 bis 52b-4);
Ansteuern optischer Schalter (56a-11, 56a-21, 56a-22, 56b-11, 56b-21, 56b-22) einer 1×N-Schaltmatrix (54a, 54b) derart, dass der verstärkte Lichtanteil zu dem ausgewählten Freiraumkoppler geführt wird; und
Aussenden des verstärkten Lichtanteils durch den ausgewählten Freiraumkoppler in den Freiraum;
Kollimieren des von dem ausgewählten Freiraumkoppler ausgesandten verstärkten Lichtanteils unter Verwendung eines kollimierenden optischen Systems (70);
Detektieren einer Überlagerung von reflektiertem Licht, das von dem ausgewählten Freiraumkoppler ausgesandt und an dem Objekt (12) reflektiert wurde, und Referenzlicht, das nicht an dem Objekt (12) reflektiert wurde; und
Berechnen des Abstands zu dem Objekt (12) auf der Grundlage der detektierten Überlagerung;
**dadurch gekennzeichnet, dass**
der jeweilige Lichtanteil in einem schaltbaren optischen Halbleiterverstärker (44a, 44b) verstärkt wird, und dass
der schaltbare optische Halbleiterverstärker (44a, 44b) und die Schaltmatrix (54a, 54b) jeder Verarbeitungseinheit (40a, 40b) derart angesteuert werden, dass zu einem gegebenen Zeitpunkt
der schaltbare optische Halbleiterverstärker (44a, 44b) einer Verarbeitungseinheit in einem "Ein"-Zustand ist, sodass der ausgewählte Freiraumkoppler dieser einen Verarbeitungseinheit den verstärkten Lichtanteil aussendet,
in einer anderen Verarbeitungseinheit (40a, 40b; 40a, 40b, 40c, 40d) der schaltbare optische Halbleiterverstärker (44a, 44b) in einem "Aus"-Zustand ist und mindestens einer der optischen Schalter in der Schaltmatrix (56a-11, 56a-21, 56a-22, 56b-11, 56b-21, 56b-22) betätigt wird.

11. Verfahren nach Anspruch 10, wobei die schaltbaren optischen Halbleiterverstärker (44a, 44b) und die Schaltmatrizen (54a, 54b) der Verarbeitungseinheiten (40a, 40b) abwechselnd derart angesteuert werden, dass, nachdem ein Freiraumkoppler (52a-1 bis 52a-4, 52b-1 bis 52b-4) einer Verarbeitungseinheit einen Lichtanteil ausgesandt hat, ein Freiraumkoppler einer anderen Verarbeitungseinheit den nächsten Lichtanteil aussendet.

12. Verfahren nach Anspruch 10 oder 11, wobei die N Freiraumkoppler (52a-1 bis 52a-4, 52b-1 bis 52b-4) jeder Verarbeitungseinheit (40a, 40b) das reflektierte Licht empfangen und wobei mindestens ein Detektor (64a-1, 64a-2, 64b-1, 64b-2) in jeder Verarbeitungseinheit das reflektierte Licht detektiert.

13. Verfahren nach Anspruch 12, wobei sich das reflektierte Licht durch eine Zusammenführungsmatrix von dem ausgewählten Freiraumkoppler zu dem mindestens einen Detektor (64a-1, 64a-2, 64b-1, 64b-2) ausbreitet.

14. Verfahren nach Anspruch 12 oder 13, wobei mehr als die Hälfte des reflektierten Lichts nach dem Eintritt in den ausgewählten Freiraumkoppler durch Lichttrenner (62a-1 bis 62a-4, 62b-1 bis 62b-4) von einem optischen Wellenleiter abgetrennt wird.

15. Verfahren nach einem der Ansprüche 10 bis 14, wobei in jeder Verarbeitungseinheit (40a, 40b) ein Teilanteil von dem jeweiligen Lichtanteil abgezweigt wird, bevor der jeweilige Lichtanteil in die Schaltmatrix (54a, 54b) eintritt, und wobei der Teilanteil das Referenzlicht bildet.

## Revendications

1. Dispositif (14) pour la mesure par balayage de la distance à un objet (12), comprenant:
une source lumineuse (16) configurée pour générer une lumière ayant une fréquence variable,
un diviseur de lumière (38 ; 380) configuré pour diviser la lumière générée par la source lumineuse en une pluralité de portions de lumière,
une pluralité d'unités de traitement (40a, 40b ; 40a, 40b, 40c, 40d), chaque unité de traitement comprenant :
un amplificateur optique (44a, 44b) relié au diviseur de lumière (38 ; 380) et configuré pour amplifier l'une des portions de lumière,
N coupleurs en espace libre (52a-1 à 52a-4, 52b-1 à 52b-4), avec N = 2, 3, ..., chaque coupleur en espace libre étant configuré pour émettre la portion de lumière amplifiée par l'amplificateur optique (44a, 44b), et
une matrice de commutation 1×N (54a, 54b) comprenant une pluralité de commutateurs optiques (56a-11, 56a-21, 56a-22, 56b-11, 56b-21, 56b-22) et reliant l'amplificateur optique (44a, 44b) aux N coupleurs en espace libre,
un système optique de collimation (74) ayant un plan focal avant (75) dans lequel sont agencés les coupleurs en espace libre (52a-1 à 52a-4, 52b-1 à 52b-4),
un détecteur (64a-1, 64a-2, 64b-1, 64b-2) configuré pour détecter une superposition de lumière réfléchie qui a été émise par les coupleurs en espace libre et réfléchie au niveau de l'objet (12), et de lumière de référence qui n'a pas été réfléchie au niveau de l'objet (12), et
une unité de calcul (34) configurée pour déterminer la distance à l'objet (12) sur la base de la superposition détectée par le détecteur (64a-1, 64a-2, 64b-1, 64b-2), **caractérisé en ce que**
les amplificateurs optiques sont des amplificateurs optiques à semi-conducteur commutables (44a, 44b), et **en ce que**
le dispositif comprend une unité de commande (70) configurée pour commander l'amplificateur optique à semi-conducteur commutable (44a, 44b) et la matrice de commutation de chaque unité de traitement (40a, 40b) de telle sorte que, à un instant donné,
l'amplificateur optique à semi-conducteur commutable (44a, 44b) d'une unité de traitement (40a, 40b ; 40a, 40b, 40c, 40d) se trouve dans un état « activé », de sorte que l'un des coupleurs en espace libre (52a-1 à 52a-4, 52b-1 à 52b-4) de ladite unité de traitement émet la portion de lumière,
dans une autre unité de traitement (40a, 40b ; 40a, 40b, 40c, 40d), l'amplificateur optique à semi-conducteur commutable (44a, 44b) se trouve dans un état « désactivé » et au moins l'un des commutateurs optiques de la matrice de commutation (56a-11, 56a-21, 56a-22, 56b-11, 56b-21, 56b-22) est actionné.

2. Dispositif selon la revendication 1, dans lequel les N coupleurs en espace libre (52a-1 à 52a-4, 52b-1 à 52b-4) de chaque unité de traitement (40a, 40b) sont configurés pour recevoir la lumière réfléchie, et dans lequel chaque unité de traitement (40a, 40b) comprend en outre au moins un détecteur (64a-1, 64a-2, 64b-1, 64b-2) relié aux N coupleurs en espace libre.

3. Dispositif selon la revendication 2, dans lequel chaque unité de traitement (40a, 40b) comprend une matrice de combinaison qui relie les N coupleurs en espace libre audit au moins un détecteur.

4. Dispositif selon la revendication 3, dans lequel la matrice de combinaison comprend une pluralité d'autres commutateurs optiques (68a-1, 68a-2, 68b-1, 68b-2).

5. Dispositif selon l'une quelconque des revendications 2 à 4, dans lequel chaque unité de traitement (40a, 40b) comprend une pluralité de séparateurs optiques (62a-1 à 62a-4, 62b-1 à 62b-4) qui dirigent vers le détecteur (64a-1, 64a-2, 64b-1, 64b-2) plus de la moitié de la lumière réfléchie couplée dans l'un des coupleurs en espace libre (52a-1 à 52a-4, 52b-1 à 52b-4).

6. Dispositif selon l'une quelconque des revendications précédentes, dans lequel l'unité de commande (70) est configurée pour commander de manière alternée les amplificateurs optiques à semi-conducteur commutables (44a, 44b) et les matrices de commutation (54a, 54b) des unités de traitement (40a, 40b), de telle sorte qu'après qu'un coupleur en espace libre d'une unité de traitement a émis une portion de lumière, un coupleur en espace libre d'une autre unité de traitement émet la portion de lumière suivante.

7. Dispositif selon la revendication 6, dans lequel l'unité de commande (70) est configurée pour commander les amplificateurs optiques à semi-conducteur commutables (44a, 44b) de telle sorte que, à un instant donné, la moitié des amplificateurs optiques à semi-conducteur commutables (44a, 44b) disponibles se trouvent dans l'état « activé », tandis que l'autre moitié se trouve dans l'état « désactivé ».

8. Dispositif selon l'une quelconque des revendications précédentes, dans lequel chaque unité de traitement (40a, 40b) comprend un autre diviseur de lumière (22) configuré pour prélever une sous-portion de l'une des portions de lumière avant que cette dernière n'entre dans la matrice de commutation (54a, 54b), la sous-portion formant la lumière de référence.

9. Dispositif selon la revendication 8, dans lequel chaque unité de traitement (40a, 40b) comprend au moins deux détecteurs (64a-1, 64a-2, 64b-1, 64b-2) et au moins un commutateur de lumière de référence (68a, 68b) configuré pour distribuer la lumière de référence auxdits au moins deux détecteurs.

10. Procédé de réalisation d'une mesure par balayage de la distance à un objet (12), comprenant les étapes consistant à :
générer une lumière ayant une fréquence variable ;
diviser la lumière en une pluralité de portions de lumière ;
traiter chaque portion de lumière dans une unité de traitement différente (40a, 40b), le traitement comprenant les étapes consistant à :
amplifier la portion de lumière respective dans un amplificateur optique (44a, 44b) ;
sélectionner un coupleur en espace libre parmi une pluralité de N coupleurs en espace libre (52a-1 à 52a-4, 52b-1 à 52b-4) ;
commander des commutateurs optiques (56a-11, 56a-21, 56a-22, 56b-11, 56b-21, 56b-22) d'une matrice de commutation 1×N (54a, 54b) de telle sorte que la portion de lumière amplifiée soit guidée vers le coupleur en espace libre sélectionné ; et
émettre la portion de lumière amplifiée dans l'espace libre au moyen du coupleur en espace libre sélectionné ;
collimater la portion de lumière amplifiée émise par le coupleur en espace libre sélectionné à l'aide d'un système optique de collimation (70) ;
détecter une superposition de lumière réfléchie qui a été émise par le coupleur en espace libre sélectionné et réfléchie au niveau de l'objet (12), et de lumière de référence qui n'a pas été réfléchie au niveau de l'objet (12) ; et
calculer la distance à l'objet (12) sur la base de la superposition détectée ;
**caractérisé en ce que**
la portion de lumière respective est amplifiée dans un amplificateur à semi-conducteur commutable (44a, 44b), et **en ce que**
l'amplificateur optique à semi-conducteur commutable (44a, 44b) et la matrice de commutation (54a, 54b) de chaque unité de traitement (40a, 40b) sont commandés de telle sorte que, à un instant donné,
'amplificateur optique à semi-conducteur commutable (44a, 44b) d'une unité de traitement se trouve dans un état « activé », de sorte que le coupleur en espace libre sélectionné de ladite unité de traitement émet la portion de lumière amplifiée,
dans une autre unité de traitement (40a, 40b ; 40a, 40b, 40c, 40d), l'amplificateur optique à semi-conducteur commutable (44a, 44b) se trouve dans un état « désactivé » et au moins l'un des commutateurs optiques de la matrice de commutation (56a-11, 56a-21, 56a-22, 56b-11, 56b-21, 56b-22) est actionné.

11. Procédé selon la revendication 10, dans lequel les amplificateurs optiques à semi-conducteur commutables (44a, 44b) et les matrices de commutation (54a, 54b) des unités de traitement (40a, 40b) sont commandés de manière alternée, de telle sorte qu'après qu'un coupleur en espace libre (52a-1 à 52a-4, 52b-1 à 52b-4) d'une unité de traitement a émis une portion de lumière, un coupleur en espace libre d'une autre unité de traitement émet la portion de lumière suivante.

12. Procédé selon la revendication 10 ou 11, dans lequel les N coupleurs en espace libre (52a-1 à 52a-4, 52b-1 à 52b-4) de chaque unité de traitement (40a, 40b) reçoivent la lumière réfléchie, et dans lequel au moins un détecteur (64a-1, 64a-2, 64b-1, 64b-2) de chaque unité de traitement détecte la lumière réfléchie.

13.Procédé selon la revendication 12, dans lequel la lumière réfléchie se propage, à travers une matrice de combinaison, du coupleur en espace libre sélectionné audit au moins un détecteur (64a-1, 64a-2, 64b-1, 64b-2).

14. Procédé selon la revendication 12 ou 13, dans lequel plus de la moitié de la lumière réfléchie est séparée d'un guide d'ondes optique par des séparateurs optiques (62a-1 à 62a-4, 62b-1 à 62b-4) après son entrée dans le coupleur en espace libre sélectionné.

15. Procédé selon l'une quelconque des revendications 10 à 14, dans lequel, dans chaque unité de traitement (40a, 40b), une sous-portion de la portion de lumière respective est prélevée avant que la portion de lumière respective n'entre dans la matrice de commutation (54a, 54b), la sous-portion formant la lumière de référence.
